(19) Europäisches Patentamt
European Patent Office
Office européen des brevets

(11) **EP 2 065 731 A1**

(12) **EUROPEAN PATENT APPLICATION**

(43) Date of publication:
**03.06.2009 Bulletin 2009/23**

(51) Int Cl.:
*G01S 13/90* (2006.01)    *G01S 7/40* (2006.01)
*G01S 7/41* (2006.01)

(21) Application number: 08170042.9

(22) Date of filing: **27.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.11.2007 IT MO20070363**

(71) Applicants:
- **Politecnico di Milano**
  **20133 Milano (IT)**
- **Aresys S.r.l. - Spin off del Politecnico di Milano**
  **20133 Milano (IT)**
- **Tele-Rilevamento Europa - T.R.E. Srl**
  **20133 Milano (IT)**

(72) Inventors:
- **D'Aria, Davide**
  **24100 Bergamo (IT)**
- **Ferretti, Alessandro**
  **20147 Milano (IT)**
- **Giudici, Davide**
  **22044 Inverigo (CO) (IT)**
- **Monti Guarnieri, Andrea**
  **22100 Como (IT)**
- **Rizzoli, Paola**
  **24023 Clusone (BG) (IT)**
- **Rocca, Fabio**
  **20131 Milano (IT)**

(74) Representative: **Crugnola, Pietro**
**Luppi & Associati S.r.l.**
**Via Camperio, 11**
**20123 Milano (IT)**

(54) **Method for radiometric calibration of SAR sensors**

(57)    A method for radiometric calibration of SAR radar sensors comprises the following steps:
- selecting from a plurality of images co-recorded by said sensors pixels corresponding to resolution cells on earth comprising targets that maintain the radiometric features unaltered over time, said selecting occurring on a portion of image common to said N images and on the basis of the calculation of a stability index of said radiometric features;
- estimating calibrating constants, one for each image;
- using said calibrating constants to compensate each of said images, obtaining compensated images;
- repeating said estimating by using said compensated images until a convergence is reached, said convergence being defined as a stage of said repeating in which a further repeating does not involve significant variations in the estimation of said calibrating constants.

Fig. 1

**Description**

The present invention refers to a method for the radiometric calibration of SAR radar images, i.e. Synthetic Aperture Radar.

A synthetic aperture radar system produces a two-dimensional image.

One dimension of the image is known as the range and it refers to the distance in the line of vision between the radar sensor and the target.

The other dimension is known as the azimuth, and this represents the direction that is orthogonal to the range, i.e. the coordinate that defines the position of the radar sensor during the acquisition of the image.

The resolution of the image in the two dimensions is determined by two different physical reasons. In the range dimension, the distance between the sensor of the radar and the target is measured by the sensor by determining the time that has elapsed between the transmission of an electromagnetic pulse and the reception thereof as an echo of the illuminated object. The precision of the distance measurement is thus determined by the precision with which the delay of the received pulse compared with the transmitted pulse is measured.

In the azimuth direction, the ability to distinguish two different targets depends on the dimension of the antenna compared with the wavelength at which the sensor operates. The greater the dimension of the antenna, the greater the ability to distinguish two near targets and thus the greater the resolution. Generally, SAR radar operates at a frequency comprised between 400 MHz and 10 GHz.

In this band of frequencies the wavelength is of the order of tens of centimetres.

The need to obtain high resolutions (of the order of a metre) would require the use of physical antennas with dimensions of the order of a kilometre.

The SAR technique enables the obvious practical limitation to be circumvented of using antennas of such dimensions through the generation of a synthetic antenna. This is possible owing to the use of a radar of coherent type, in which the module and the phase of the reflected electromagnetic wave can be measured, which radar is mounted on a movable platform (aeroplane or satellite).

During the acquisition of the image, the radar sensor mounted on the movable platform travels a long distance (in the order of kilometres), simulating an antenna of these dimensions, with a real antenna that has, on the other hand, dimensions of the order of a few metres.

The SAR image is thus a grid of numeric values, in which each element of the grille (also called pixels) has the dimensions defined by the resolution in the range direction and in the azimuth direction and has a value proportional to the intensity of the wave transmitted by the sensor and reflected back by the target. Said value carries both information on the phase and on the amplitude of the wave received; this information is appropriately represented by complex numbers. The module of these numbers determines the luminosity of each pixel of the SAR image.

Various factors may cause known or systematic variations in the luminosity of the pixels considered. Such factors may be:

- variations in the time of the features of the targets that contribute to that pixel;
- variation in the intensity of the wave reflected back with the varying of the acquisition geometries such as, in particular, the distance and the angle of incidence of the electromagnetic waves on the targets;
- known or predictable variations of the radiometric features of the radar sensor, including variation of the power transmitted or of the directivity of the antenna and the variation of the corresponding antenna gain (or pattern).

Once the known luminosity variation factors listed previously are removed, temporal sequences of the amplitude of each pixel are obtained, which are obtained considering only the module that the pixel assumes in each image.

Such temporal sequences should ideally show a constant value because all the factors that may determine possible variations thereof have been removed.

Nevertheless, residual variations in amplitude may persist that are caused by:

- non-ideal stability over time of the radiometric features of the reflectors that contribute to the pixels;
- possible non-known or unexpected variations in the behaviour of the sensor.

The presence thereof does not enable a physical quantity to be associated with each pixel, known as Radar Cross Section (RCS), which represents that area that would radiate isotropically all the incident power with the same radiation intensity that the target radiates back to the radar actually. The estimation of the residual variations is important because it enables the operating status of the sensor to be monitored and in particular enables temporal variations of the gain of the instrument to be estimated (for example: power losses), which represents the main object of the technique proposed here.

In order to understand the importance of this operation, reference should be made to satellite ERS-2 belonging to the European Space Agency (ESA), which has been in orbit since 1995.

The SAR sensor on ERS-2 is affected by a loss of continuous power, quantified at approximately 0.66 dB per year in the period between the launch and the end of 2000, and 0.82 dB per year from 2000 to the end of February 2003.

There exist to date basically two different strategies that enable operating status of the sensor to be monitored (called the calibration operation): the first is normally conducted through a special circuitry inside the sensor (internal calibration), suitable for monitoring possible faults in the operation of the elements constituting the acquisition chain, the second, on the other hand, resorts to the use of artificial reflectors placed on the ground, having a known reflectivity. These reflectors can be passive, such as trihedrons or corner reflectors, or active, the so-called transponders. These instruments, positioned in particular and favourable regions, called calibration sites, in addition to showing as merits great stability over time and high measuring precision, also have various drawbacks of practical type that go from positioning in suitable regions to the need for a precise pointing towards the sensor, to the high maintenance and operational cost.

The object of the present invention is to provide a radiometric calibrating technique that obtains the desired information directly from the data acquired by the radar, thus enabling the previously mentioned drawbacks to be remedied.

According to the present invention a method is provided for radiometric calibration of SAR radar sensors characterised in that it comprises the following steps:

- selecting from a plurality of images co-recorded by said sensors pixels corresponding to resolution cells on earth comprising targets that maintain the radiometric features unaltered over time, said selecting occurring on a portion of image common to said N images and on the basis of the calculation of a stability index of said radiometric features;
- estimating calibrating constants, one for each image;
- using said calibrating constants to compensate each of said images, obtaining compensated images;
- repeating said estimating by using said compensated images until a convergence is reached, said convergence being defined as a stage of said repeating in which a further repeating does not involve significant variations in the estimation of said calibrating constants.

Owing to the present invention it is possible to calibrate a SAR radar without resorting to the use of artificial reflectors placed on the earth, with an undoubted advantage from the point of view of the simplicity of calibration and of costs.

An embodiment of the invention is disclosed below by way of non-limiting example, with reference to the attached figures, in which:

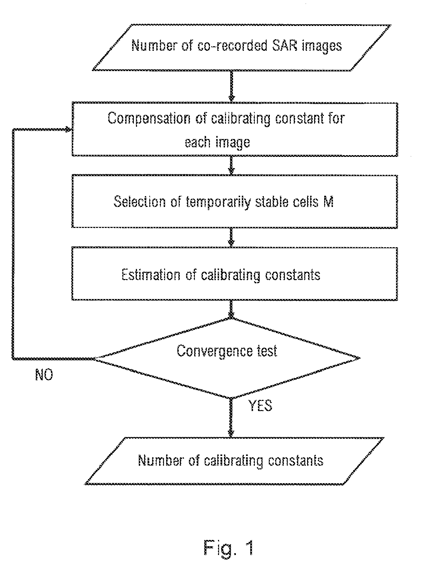

Figure 1 is a block diagram that illustrates the various steps of the method according to the invention;
Figure 2 shows the module of a complete SAR image, acquired by the satellite ERS2 above the city of Milan;
Figure 3 shows the pixels selected for the features of radiometric stability thereof and with which the calibrating constants are estimated;
Figure 4 shows the matrix of the PS amplitudes used to estimate the $N$ calibrating constants;
Figure 5 shows the result of the estimation obtained for the Milan ERS-2 dataset, applying the method according to the invention to the complete image and considering a temporal space of images that goes from 1995 to 2000; the axis of abscissas is graduated in years, the axis of ordinates is graduated in dB;
Figure 6 shows a comparison between the results obtained for the Milan dataset and for the Flevoland (NL) dataset, where there is a transponder;
Figure 7, lastly, shows an estimation of the variations in the antenna gain in range, obtained by making an estimation of the calibrating constants on a series of sub-blocks in range of the image.

The method according to the invention comprises a computer-processing procedure that uses as input data a sufficiently high number $N$ of images made with a synthetic aperture radar and selects pixels corresponding to resolution cells on earth characterised by targets that maintain radiometric features unaltered over time.

The selection is made on the basis of the calculation of a stability index defined as the ratio between the average temporal value of the amplitude $\mu$ of the wave reflected by the selected pixels and the standard deviation $\sigma$ thereof. The selected pixels will then be identified as *PS*.

One of the possible implementations of the method according to the invention is based on the development of the following statistical model: if the temporal distribution of a stable target is considered, it can be identified by a probability density

$$f(x \mid a, \upsilon) \qquad (1)$$

where the Mth variable $x$ is characterised by $P$ $\upsilon$-parameters. Said parameters represent features of the single target such as, for example, the *RCS* (Radar Cross Section) and the backscatter noise.

With each image, on the other hand, a single parameter $a_i$ is associated that is the main object of the estimation.

After a suitable selection of targets, a matrix of the *PS* amplitudes of dimensions *N x M* is obtained, where *N* identifies the available number of images and *M* identifies the targets selected for each image.

The object is now to estimate a single constant value for each image.

By resorting to the statistics disclosed in equation 1 above, it is possible to define a set of *N x M* casual variables *x(i,j)*, (one for each *PS*), as follows:

$$x(i, j) \sim f(x_{i,j} \mid a_i, \upsilon_j) \qquad (2)$$

With *i*=1,... ,*N* and *j*=1,...,*M*.

It is thus possible to obtain an estimator for estimating the calibrating constants. Said estimator can, for example, be defined as a maximum likelihood estimator. If we now suppose that this estimator is used and the independence between various *PS* distributions is assumed, it is possible to disclose the total likelihood function in relation to the parameters $a$ and $\upsilon$, as:

$$L(x_{i,j} \mid a_i, \upsilon_j) = \prod_{i=1}^{N} \prod_{j=1}^{M} f(x_{i,j} \mid a_i, \upsilon_j) \qquad (3)$$

by applying the logarithm, which is a monotone function, the *log likelihood* is then obtained:

$$L_{\log}(x_{i,j} \mid a_i, \upsilon_j) = Log(L(x_{i,j} \mid a_i, \upsilon_j)) \qquad (4)$$

Finding the maximum likelihood estimator means maximising the log-likelihood function with respect to the parameters that have to be estimated. In our case, maximisation is performed with respect to all the parameters that characterise the *PS* distributions:

$$a_j, \upsilon_j = \max_{a_i, \vartheta_j} L_{\log}(x_{i,j} \mid a_i, \upsilon_j) \qquad (5)$$

It is necessary to derive the function $L_{\log}$ with respect to all the parameters and then to set to zero such derivatives. A system of equations is thus obtained that can be resolved numerically in a repeatable manner.

The convergence is typically reached with few repetitions. The result is the joint estimation of *2M+ N* parameters $a$ and $\upsilon$. The parameters of interest for the calibration are thus the *N* constants $a_i$.

The method according to the invention thus consists of the following steps:

- a sufficiently extended portion is selected that is common to all the co-recorded images, on which to perform the estimation;
- on all the N images the pixels are identified corresponding to resolution cells on earth characterised by targets that maintain the radiometric features unaltered over time; selection occurs on the basis of the calculation of a stability index defined as the ratio between the temporal average value of the amplitude $\mu$ of the wave reflected by the targets, and the standard deviation $\sigma$ thereof.

*The matrix of the PS amplitudes* is thus generated that have dimensions *N x M*, where *M* represents the total number of selected pixels.

- *N* calibrating constants are estimated (defined as a pure number), one for each image, using the amplitudes of the selected pixels; exploiting the temporal statistical features of the *PS*, the estimation can be made by applying the maximum likelihood estimator disclosed previously, that enables both the characteristic parameters of the *PS* statistics and the *N* calibrating constants to be estimated jointly;
- the estimated calibrating constants are used for compensating (by multiplication) the corresponding images and the estimating procedure is repeated, using the compensated images, until the convergence is reached, defined as a stage for which the repetition does not involve significant variations in the estimation of the calibrating constants. It should be noted that at the first cycle of the algorithm, compensation occurs by multiplying each image by a unit constant.

The calibrating constants can be estimated separately on several distinct pixel groups inside the same image (space-variant). This feature can be exploited to obtain an estimation of the variations in the antenna gain in range.

The SAR image is weighed by the two-dimensional antenna gain $G(\theta,\phi)$, that acts as a multiplying term of the amplitude, depending on the angles in elevation (range) $\theta$ and in azimuth $\phi$. The $G(\theta,\phi)$ variations affect the acquired data and can be visible inside the image, especially in terms of the range gain pattern.

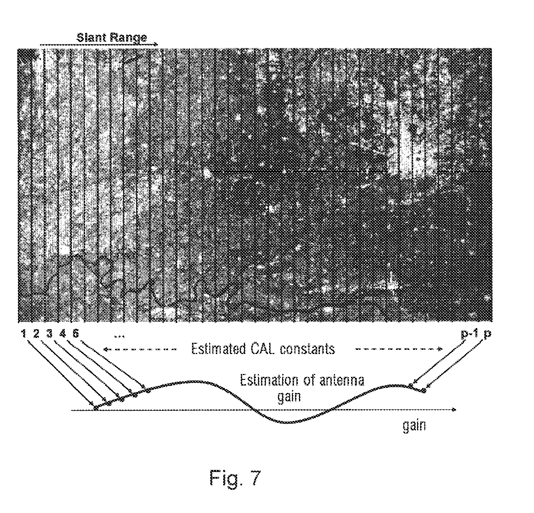

If the gain in range were completely constant, each estimation would lead to the same result. If, on the other hand, $G(\theta,\phi)$ is subjected to variations along the range, it is possible to quantify the entity thereof by dividing the image into subgroups of pixels in range and estimating separately the calibrating constants for each subgroup. This concept is illustrated in Figure 7.

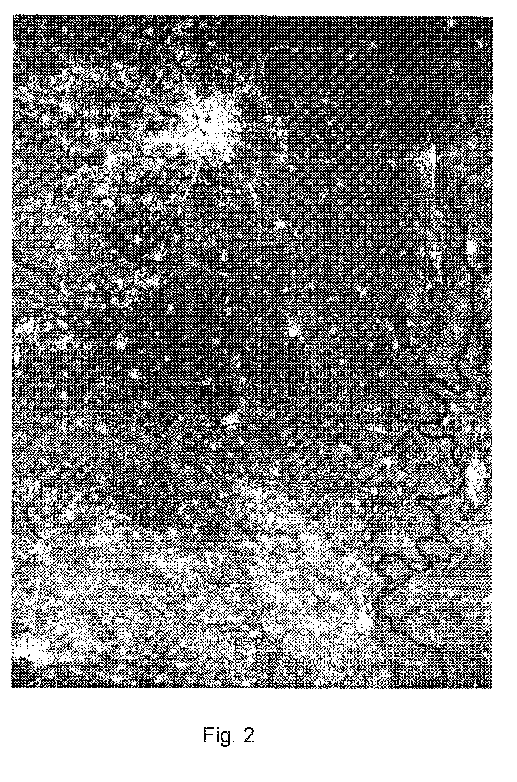

In order to explain more clearly the practical application of the technique, in Figures 2 to 6 there is illustrated, merely by way of non-limiting example, an application of the method according to the invention to a set of images generated by the ERS-2 satellite of the European Space Agency (ESA).

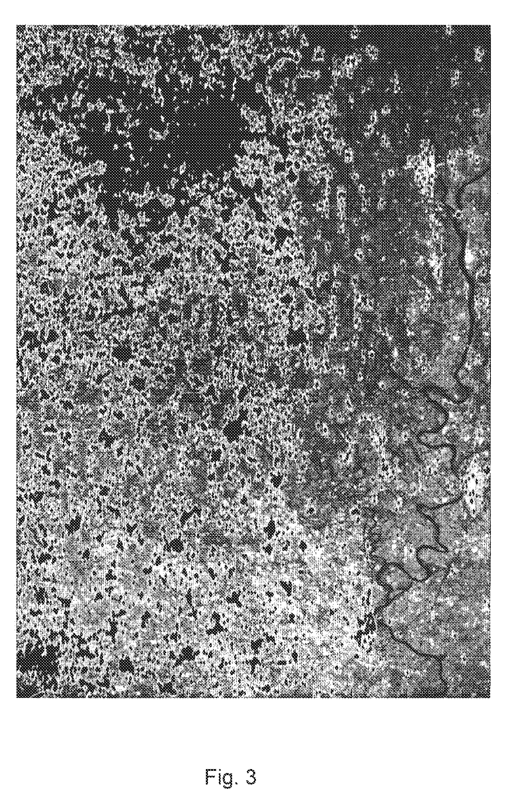

In particular, in Figure 2 there is shown the module of a complete SAR image acquired with the satellite ERS2 above the city of Milan, whilst in Figure 3 there are shown the pixels, selected by the image in Figure 2, for characteristics of radiometric stability thereof with which the estimation of the calibrating constants was conducted.

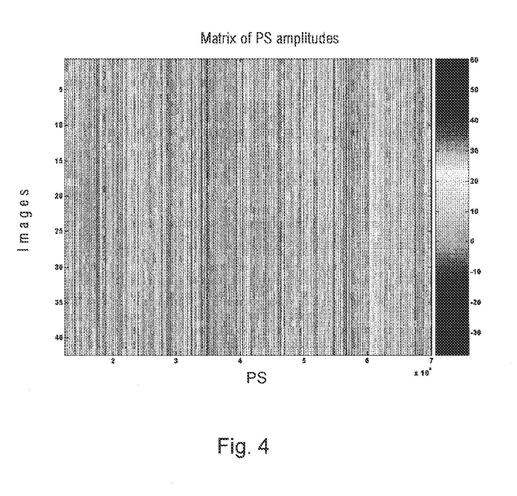

In Figure 4 there is illustrated the matrix of the amplitudes *PS*, used to estimate the N calibrating constants on the basis of the selected pixels in Figure 3.

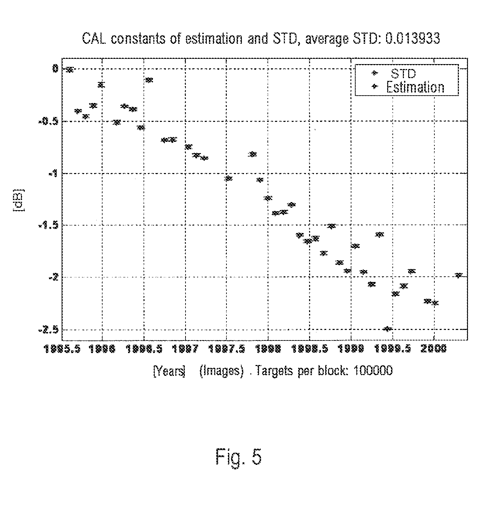

In Figure 5 there is shown the result of the estimation of the calibrating constants obtained for the Milan ERS-2 dataset, applying the method according to the invention to the complete image and considering a temporal space of images that goes from 1995 to 2000; the axis of abscissas is graduated in years, the axis of ordinates is graduates in dB.

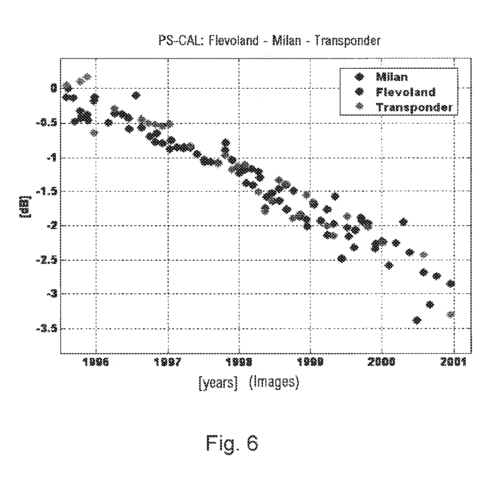

In Figure 6 the results obtained in the estimation of the calibrating constants for the Milan dataset and for the Flevoland (NL) dataset, where there is a transponder, are compared.

In the practical embodiment, the constructional details can be different from those indicated but be technically equivalent thereto without thereby falling outside the scope of the presence invention.

**Claims**

1. Method for radiometric calibration of SAR radar sensors **characterised in that** it comprises the following steps:

   - selecting from a plurality of images co-recorded by said sensors pixels corresponding to resolution cells on earth comprising targets that maintain radiometric features unaltered over time, said selecting occurring on a portion of image common to said *N* images and on the basis of the calculation of a stability index of said radiometric features;
   - estimating calibrating constants, one for each image;
   - using said calibrating constants to compensate each of said images, obtaining compensated images;
   - repeating said estimating by using said compensated images until a convergence is reached, said convergence being defined as a stage of said repeating in which a further repeating does not involve significant variations in the estimation of said calibrating constants.

2. Method according to claim 1, wherein said stability index is defined as the ratio between the temporal average value of the amplitude $\mu$ of the wave reflected by said targets and the standard deviation thereof $\sigma$.

3. Method according to claim 2, further comprising generating a matrix of said amplitudes having dimensions *N x M*, wherein *N* is the number of said images and M *is* the number of said selected pixels, each element of the matrix consisting of the amplitude of a pixel selected from one of said images.

4. Method according to claim 2, or 3, wherein said estimating is achieved by applying a maximum likelihood estimator to said calibrating constants.

5. Method according to any preceding claim, wherein said selecting comprises dividing said pixels into subgroups of pixels in a range direction of said radar sensor.

6. Method according to claim 5, wherein said estimating is achieved separately for each subgroup of said pixels.

Number of co-recorded SAR images

Compensation of calibrating constant for
each image

Selection of temporarily stable cells M

Estimation of calibrating constants

Convergence test

NO

YES

Number of calibrating constants

Fig. 1

Fig. 2

Fig. 3

Matrix of PS amplitudes

Fig. 4

CAL constants of estimation and STD, average STD: 0.013933

[Years]   (Images) . Targets per block: 100000

Fig. 5

PS-CAL: Flevoland - Milan - Transponder

Fig. 6

Fig. 7

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BIANCA CASSEE: "Selection of Permanent Scatterer Candidates for Deformation Monitoring; Amplitude Calibration of ERS SLC SAR images" 1 September 2004 (2004-09-01), FACULTY OF CIVIL ENGINEERING AND GEOSCIENCES, DELFT UNIVERSITY OF TECHNOLOGY , DELFT , XP009113783 Retrieved from the Internet: URL:http://enterprise.lr.tudelft.nl/doris/Literature/cassee04.pdf> Section 3.4 | 1-4 | INV. G01S13/90 G01S7/40 G01S7/41 |
| Y | ----- | 5,6 | |
| Y | LUKOWSKI T I ET AL: "RADARSAT elevation antenna pattern determination" GEOSCIENCE AND REMOTE SENSING, 1997. IGARSS '97. REMOTE SENSING - A SC IENTIFIC VISION FOR SUSTAINABLE DEVELOPMENT., 1997 IEEE INTERNATIONAL SINGAPORE 3-8 AUG. 1997, NEW YORK, NY, USA,IEEE, US, vol. 3, 3 August 1997 (1997-08-03), pages 1382-1384, XP010234460 ISBN: 978-0-7803-3836-4 * page 1383, left-hand column * | 5,6 | |
| | ----- | | TECHNICAL FIELDS SEARCHED (IPC) G01S |
| A | NOFERINI L. ET AL: "Permanent Scatterers Analysis for Atmospheric Correction in Ground-Based SAR Interferometry" IEEE TRANSACTIONS ON GEOSCIENCE AND REMOTE SENSING, IEEE SERVICE CENTER, PISCATAWAY, NJ, US, vol. 43, no. 7, 1 July 2005 (2005-07-01), pages 1459-1471, XP011135475 ISSN: 0196-2892 * the whole document * | 1-6 | |
| | ----- -/-- | | |

The present search report has been drawn up for all claims

| Place of search | Date of completion of the search | Examiner |
|---|---|---|
| Munich | 16 March 2009 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 08 17 0042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FERRETTI A. ET AL: "Permanent Scatterers in SAR Interferometry" IEEE TRANSACTIONS ON GEOSCIENCE AND REMOTE SENSING, IEEE SERVICE CENTER, PISCATAWAY, NJ, US, vol. 39, no. 1, 1 January 2001 (2001-01-01), XP011021652 ISSN: 0196-2892 * the whole document * ----- | 1-6 | |

**TECHNICAL FIELDS SEARCHED    (IPC)**

The present search report has been drawn up for all claims

| Place of search | Date of completion of the search | Examiner |
|---|---|---|
| Munich | 16 March 2009 | Rudolf, Hans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)